# EUROPÄISCHE PATENTSCHRIFT

(11) **EP 3 657 093 B1**
(45) Veröffentlichungstag und Bekanntmachung des Hinweises auf die Patenterteilung: **14.07.2021**
(21) Anmeldenummer: 19211089.8
(22) Anmeldetag: 25.11.2019
(51) Int. Cl.: F24S 10/75, F24S 25/20, F24S 80/40

(54) **VERFAHREN UND FÜGEVORRICHTUNG ZUM MONTIEREN EINES SOLARKOLLEKTORS**
PROCESS AND JOINING DEVICE FOR MOUNTING A SOLAR COLLECTOR
PROCÉDÉ ET DISPOSITIF D'ASSEMBLAGE DE MONTAGE DE COLLECTEUR SOLAIRE

(30) Priorität: 26.11.2018 DE 102018220249
(43) Veröffentlichungstag der Anmeldung: 27.05.2020
(73) Patentinhaber: Robert Bosch GmbH, 70442 Stuttgart (DE)
(72) Erfinder: Otting, Herbert, 49832 Beesten (DE); Roling, Klaus, 48653 Coesfeld (DE); Kallwellis, Volker Dietmar, 13289-444 Vinhedo (BR)

(56) Entgegenhaltungen:
- WO-A1-2010/023074
- DE-A1-102014 211 936
- US-A- 4 252 103
- US-A1- 2008 011 289
- US-A1- 2011 146 669

## Beschreibung

### Stand der Technik

Die Erfindung betrifft ein Verfahren zum Montieren eines Solarkollektors sowie eine Fügevorrichtung zum Montieren eines Solarkollektors, wobei der Solarkollektor einen Solarabsorber, eine transparente Abdeckung, einen Rahmen sowie optional eine Rückwand umfasst, wobei der Rahmen mehrere Rahmenteile umfasst. Die Montage erfolgt häufig händisch.

Das Dokument DE 10 2014 211936 A1 offenbart ein Verfahren zum Montieren eines Solarkollektors, wobei der Solarkollektor einen Solarabsorber, eine transparente Abdeckung, einen Rahmen und eine Rückwand umfasst.

### Offenbarung der Erfindung

Die Erfindung geht aus von einem Verfahren zum Montieren eines Solarkollektors, wobei der Solarkollektor einen Solarabsorber, eine transparente Abdeckung, einen Rahmen sowie optional eine Rückwand umfasst, wobei der Rahmen mehrere Rahmenteile umfasst. Das erfindungsgemäße Verfahren umfasst folgende Schritte:
(a) ein optionales Halten der optionalen Rückwand in einer Position H1.
(b) durchgeführt an zwei ersten Rahmenteilen, wobei jedes erste Rahmenteil mindestens eine Rahmenöffnung, vorzugsweise zwei Rahmenöffnungen, aufweist: Einführen eines Montagedorns in jede Rahmenöffnung und Halten der ersten Rahmenteile mittels der Montagedorne.
(c) durchgeführt am Solarabsorber, wobei der Solarabsorber mindestens zwei Absorberöffnungen, vorzugsweise vier Absorberöffnungen, aufweist: Einführen der selben Montagedorne wie in Schritt (b) in die Absorberöffnungen und Halten des Solarabsorbers mittels der Montagedorne in einer Position H2, insbesondere parallel vor der Rückwand.
(d) Halten der Abdeckung in einer Position H3 parallel vor dem Solarabsorber.
(e) Schieben der ersten Rahmenteile auf den Solarabsorber und die Abdeckung sowie optional auf die Rückwand.

Unter einem Solarkollektor wird hier eine Vorrichtung zum Auffangen von Solarstrahlung und zum Umwandeln der mit der Solarstrahlung einhergehenden Strahlungsenergie in Wärme verstanden, wobei die Wärme auf ein Medium, insbesondere ein fließendes Kühlfluid wie Luft, Wasser oder ein Wasser-Frostschutz-Gemisch, übertragen und mit diesem zu einer Nutzung abgeführt wird. Insbesondere kann die Wärme zum Erwärmen von Räumen oder Flüssigkeiten, beispielsweise Trinkwasser, verwendet werden. Der Solarkollektor weist auf einer im Betrieb des Solarkollektors der Sonne zugewandten Vorderseite eine, insbesondere rechteckige flache, transparente Abdeckung, insbesondere eine Glas- oder Kunststoffscheibe, auf, durch die die Solarstrahlung hindurchscheint und die einen Innenraum des Solarkollektors vorderseitig von einer Außenumgebung trennt und gegenüber Umgebungseinflüssen wie Außentemperatur, Regen, Schnee, Laub und Schmutz schützt. Ferner weist der Solarkollektor optional auf einer im Betrieb von der Sonne abgewandten Rückseite eine, insbesondere rechteckige flache, Rückwand, beispielsweise eine Blech- oder Kunststoffplatte, auf, die den Innenraum des Solarkollektors rückseitig von der Außenumgebung trennt und gegenüber den Umgebungseinflüssen schützt. Im Innenraum des Solarkollektors und parallel zur Abdeckung sowie zur optionalen Rückwand ist der Solarabsorber angeordnet, der im Betrieb die Solarstrahlung auffängt, absorbiert und in Wärme umwandelt. Insbesondere umfasst der Solarabsorber ein im Betrieb der Sonne zugewandtes, insbesondere rechteckiges flaches, geschwärztes Absorberblech sowie ein auf einer von der Sonne abgewandten Rückseite des Absorberblechs angeordnetes Rohrleitungssystem, durch das im Betrieb das Kühlfluid fließt. Das Rohrleitungssystem, das in wärmeleitender, fester Verbindung mit dem Absorberblech steht, kann als sogenannte Harfe oder Mäander ausgebildet sein und weist mindestens eine Absorberöffnung zum Eintritt des Kühlfluids in das Rohrleitungssystem sowie mindestens eine Absorberöffnung zum Austritt des Kühlfluids aus dem Rohrleitungssystem auf. Insbesondere ist die Absorberöffnung als stirnseitige Öffnung eines Rohrendes des Rohrleitungssystems ausgebildet. Auch ist ein Rohrleitungssystem denkbar, das ein Verteilerrohr mit zwei Absorberöffnungen (eine Eintrittsöffnung und eine Austrittsöffnung) sowie ein Sammelrohr mit zwei Absorberöffnungen (eine Eintrittsöffnung und eine Austrittsöffnung) aufweist; zwischen Verteilerrohr und Sammelrohr erstrecken sich harfenartig oder mäanderförmig ausgebildeten Leitrohre des Rohrleitungssystems. Die Rohrenden des Rohrleitungssystems, insbesondere die Verteilerrohrenden und Sammelrohrenden, an denen die Absorberöffnungen ausgebildet sind, stehen gegenüber einer Außenkontur, insbesondere gegenüber einer Breitenerstreckung oder einer Längserstreckung, des Absorberblechs hervor. Die Abdeckung, der Solarabsorber und die optionale Rückwand weisen im Wesentlichen gleiche oder nur geringfügig voneinander abweichende Längs- und Breitenabmessungen auf und sind stapelartig parallel voreinander angeordnet. Der Solarkollektor weist ferner einen Rahmen auf, der außen umfänglich um die Außenkanten von Abdeckung, Solarabsorber und Rückwand umläuft. Im montierten Zustand hält der Rahmen die Abdeckung, den Solarabsorber und die Rückwand auf Abstand in ihrer jeweiligen Sollposition, er trennt den Innenraum des Solarkollektors umfänglich von einer Außenumgebung und schützt den Innenraum, insbesondere den darin angeordneten Solarabsorber, gegenüber den Umgebungseinflüssen. In einem Zwischenraum zwischen Solarabsorber und Rückwand kann zusätzlich ein Wärmedämmelement vorgesehen sein. Der Rahmen umfasst mehrere, mindestens zwei, insbesondere vier, Rahmenteile, die miteinander verbunden einen, vorzugsweise umfänglich geschlossenen, Rahmen ausbilden. Die Rahmenteile sind bevorzugt leistenförmig-gestreckt ausgebildet, beispielsweise als Strangpressprofil. Alternativ können sie auch L-förmig oder U-förmig ausgebildet sein. Im Rahmen sind mindestens zwei, vorzugsweise vier, Rahmenöffnungen vorgesehen, aus denen im montierten Zustand die mindestens zwei, vorzugsweise vier, Rohrenden des Rohrleitungssystems herausragen. Zwischen Rohrende und Rahmenöffnung kann eine Dichtung angeordnet sein. Bei den Rahmenteilen kann in erste Rahmenteile und zweite Rahmenteile unterschieden werden. Beispielsweise sind zwei erste Rahmenteile länger als zwei zweite Rahmenteile, so dass sich aus ihnen ein rechteckiger flacher Rahmen ergibt, der länger ist als breit. Insbesondere die ersten Rahmenteile weisen jeweils mindestens eine Rahmenöffnung, vorzugsweise zwei Rahmenöffnungen, auf, die ausgebildet sind, die mindestens zwei, vorzugsweise vier, Rohrenden des Rohrleitungssystems aufzunehmen. Über die an den Rohrenden ausgebildete Absorberöffnungen kann das Rohrleitungssystem an weitere Rohrleitungssysteme weiterer Solarkollektoren und/oder an einen Kühlfluidkreislauf angeschlossen werden.

Unter einem Montagedorn wird hier ein Montagemittel verstanden, das in einer Aufnahmevorrichtung und/oder Fügevorrichtung zwischen mindestens einer Ruheposition und mindestens einer Montageposition verstellbar gelagert ist und mindestens einen Montageabschnitt aufweist. Beispielsweise weist der Montagedorn einen ersten Montageabschnitt für die Rahmenöffnung und einen zweiten Montageabschnitt für die Absorberöffnung auf. Alternativ kann der Montagedorn auch einen gemeinsamen Montageabschnitt für Rahmenöffnung und Absorberöffnung aufweisen. Der Montageabschnitt ist so ausgebildet, dass er zumindest teilweise in eine Öffnung, insbesondere eine Rahmenöffnung und/oder in eine Absorberöffnung, eingeführt werden kann. Dazu weist der Montageabschnitt zumindest teilweise zumindest zum Einführen ein kleineres Außenmaß auf als die Öffnung. Nach Einführen in die Öffnung kann der Montageabschnitt mit seiner Außenkontur bis an die Innenkontur der Öffnung herangebracht werden und sich in der Öffnung fixieren. Der Montagedorn kann einen Tiefenanschlag für die Einführbewegung aufweisen. Alternativ kann ein Endpunkt der Einführbewegung auch durch die von einer Fügevorrichtung vorgegebene Einführbewegung definiert sein. An der Position des Tiefenanschlags und/oder des Endpunkts zentriert sich der Montagedorn in der Öffnung. Beispielsweise kann der Montagedorn zumindest einen kegelförmigen Montageabschnitt aufweisen, der so ausgebildet ist, dass er zumindest teilweise in die Öffnung eingeführt werden kann. Insbesondere aufgrund der Kegelform und des Querschnitts der Öffnung ergibt sich bei Berührung ein Tiefenanschlag für die Einführbewegung. Alternativ oder ergänzend kann der Montagedorn - insbesondere auch im Bereich eines beispielsweise zylindrischen Montageabschnitts - auch mindestens ein Spreizmittel aufweisen, dass sich nach dem Einführen in der Öffnung aufspreizt und fixiert. Das Halten des die Rahmenöffnung aufweisenden Rahmenteils oder des die Absorberöffnung aufweisenden Solarabsorbers mittels des Montagedorns erfolgt durch Reibschluss und/oder Formschluss zwischen Montagedorn und zu haltendem Rahmenteil und/oder Solarabsorber.

Bei der Montage werden die Montagedorne, beginnend an einem vorderen freien Ende des Montageabschnitts, zunächst in die Rahmenöffnungen der ersten Rahmenteile eingeführt. Die ersten Rahmenteile werden bis in einen hinteren Bereich des einen Montageabschnitts oder in einen hinteren ersten Montageabschnitt verschoben. Dann werden die Montagedorne, mit aufgeschobenen ersten Rahmenteilen, mit ihrem vorderen freien Ende in die Absorberöffnungen des Solarabsorbers eingeführt und der Solarabsorber mittels der Montagedorne in einer Position H2 gehalten. Die transparente Abdeckung beziehungsweise die Rückwand werden stapelartig parallel und zueinander beabstandet vor beziehungsweise hinter den Solarabsorber gehalten, in einer Position H3 beziehungsweise H1. Schließlich werden die ersten Rahmenteile auf den Montagedornen aus dem hinteren Bereich des Montageabschnitts wieder in Richtung des vorderen freien Endes geschoben. Dabei schieben sich die ersten Rahmenteile auf den Solarabsorber und die Abdeckung sowie optional auf die Rückwand, insbesondere schieben sie sich über die Rohrenden des Solarabsorber-Rohrleitungssystems, auf die Kanten der Abdeckung sowie auf die Kanten der optionalen Rückwand und verschließen so den Solarkollektor gegenüber der Außenumgebung. Die Positionen H sind absolute Soll-Positionen im Raum und/oder relative Soll-Positionen der Solarkollektor-Komponenten zueinander.

Eine vorteilhafte Ausgestaltung des Verfahrens umfasst weiter die Schritte:
Schritt (f): Halten zweier zweiter Rahmenteile in einer Position H0 seitlich neben dem Solarabsorber, der Abdeckung sowie der optionalen Rückwand.
Schritt (g): Schieben der zweiten Rahmenteile auf die Abdeckung, an die ersten Rahmenteile, sowie optional auf die Rückwand.
Schritt (h): Verbinden der ersten Rahmenteile mit den zweiten Rahmenteilen.

Die zweiten Rahmenteile sind vorzugsweise leistenförmig-gestreckt ausgebildet, beispielsweise als Strangpressprofil. Sie werden so Ecke an Ecke an die ersten Rahmenteile geschoben, dass sie zusammen einen, insbesondere rechteckigen flachen, Rahmen ausbilden. Das Verbinden kann mit Verbindungsmitteln erfolgen, die einteilig mit oder getrennt von den Rahmenteilen ausgebildet sind. Beispielsweise erfolgt die Verbindung nach Art einer Rastverbindung und/oder mit Schrauben, Nieten, Klipsen und/oder mit Klebstoff oder Lot.

Bei einer weiteren vorteilhaften Ausgestaltung des Verfahrens umfasst das Halten der Rückwand und/oder des Solarabsorbers und/oder der Abdeckung und/oder der zweiten Rahmenteile ein Ausrichten und ortsfestes Halten, insbesondere in absoluten Soll-Positionen im Raum und/oder relativen Soll-Positionen der Solarkollektor-Komponenten zueinander. Das Ausrichten und ortsfeste Halten gewährleisten, dass die ersten Rahmenteile und/oder die zweiten Rahmenteile sicher und richtig auf den Solarabsorber, auf die Abdeckung, optional auf die Rückwand, und/oder aneinander geschoben werden können.

Eine weitere vorteilhafte Ausgestaltung des Verfahrens ist dadurch gekennzeichnet, dass das Schieben der ersten Rahmenteile auf den Solarabsorber und die Abdeckung sowie optional auf die Rückwand (Schritt (e)) ein Einpassen des Solarabsorbers, der Abdeckung sowie optional der Rückwand, insbesondere ein Einpassen von Rohrenden eines Solarabsorber-Rohrleitungssystems, von Kantenbereichen der Abdeckung sowie optional von Kantenbereichen der Rückwand, in zugeordnete Aufnahmeeinrichtungen in/an den ersten Rahmenteilen umfasst. Eine dem Solarabsorber, insbesondere dem Rohrende des Solarabsorber-Rohrleitungssystems, zugeordnete Aufnahmeeinrichtung kann ein, beispielsweise kreisförmiger, Durchbruch im ersten Rahmenteil, insbesondere die Rahmenöffnung des ersten Rahmenteils, sein, durch die das Rohrende beim Schieben des ersten Rahmenteils hindurchgesteckt wird. Eine der Abdeckung und/oder der Rückwand, insbesondere den Kantenbereichen der Abdeckung und/oder den Kantenbereichen der Rückwand, zugeordnete Aufnahmeeinrichtung kann eine Aufnahmenut im ersten Rahmenteil, insbesondere eine in einem Strangpressprofil ausgebildete Aufnahmenut, sein, in die die Kantenbereiche nach Art einer Nut-und-Feder-Verbindung eingeführt werden.

Ergänzend oder alternativ kann die Ausgestaltung des Verfahrens auch dadurch gekennzeichnet sein, dass das Schieben der zweiten Rahmenteile auf die Abdeckung sowie optional auf die Rückwand ein Einpassen der Abdeckung sowie optional der Rückwand, insbesondere ein Einpassen von Kanten der Abdeckung sowie optional von Kanten der Rückwand, in zugeordnete Aufnahmeeinrichtungen in/an den zweiten Rahmenteilen umfasst. Die Aufnahmeeinrichtungen können eine Aufnahmenut im zweiten Rahmenteil, insbesondere eine in einem Strangpressprofil ausgebildete Aufnahmenut, sein, in die die Kanten nach Art einer Nut-und-Feder-Verbindung eingeführt werden.

Die Aufnahmeeinrichtungen umgreifen und fixieren die Abdeckung, den Solarabsorber und die Rückwand in den ersten und zweiten Rahmenteilen, so dass diese formschlüssig und/oder kraftschlüssig gehalten werden.

Das Strangpressprofil zur Bildung der ersten Rahmenteile und das Strangpressprofil zur Bildung der zweiten Rahmenteile können identisch und insbesondere auf verschiedene Längen zugeschnitten sein.

Eine weitere vorteilhafte Ausgestaltung des Verfahrens ist dadurch gekennzeichnet, dass das Schieben der ersten Rahmenteile auf den Solarabsorber und die Abdeckung sowie optional auf die Rückwand auf einander gegenüberliegenden Seiten des Solarabsorbers sowie auf einander gegenüberliegenden ersten Kantenbereichen der Abdeckung und der Rückwand erfolgt. Ergänzend oder alternativ kann die Ausgestaltung des Verfahrens auch dadurch gekennzeichnet sein, dass das Schieben der zweiten Rahmenteile auf die Abdeckung sowie optional auf die Rückwand auf einander gegenüberliegenden zweiten Kantenbereichen der Abdeckung sowie optional der Rückwand erfolgt. Dazu weisen der Solarabsorber, die Abdeckung und die Rückwand insbesondere eine rechteckige plattenartige Gestalt mit vier Kanten auf, mit zwei einander gegenüberliegenden ersten Kanten und übereck zwei einander gegenüberliegenden zweiten Kanten.

Eine vorteilhafte Ausgestaltung des Verfahrens umfasst weiter den Schritt: Schritt (j): Auftragen eines Dicht- und/oder Klebemittels, insbesondere ein Silikon aufweisend, an den Aufnahmeeinrichtungen in/an den ersten Rahmenteilen und/oder den zweiten Rahmenteilen, insbesondere an den Aufnahmeeinrichtungen zum Einpassen der Abdeckung sowie optional der Rückwand. Dieser Schritt erfolgt vorzugsweise vor dem Schieben der ersten Rahmenteile und/oder der zweiten Rahmenteile auf den Solarabsorber und die Abdeckung sowie optional auf die Rückwand (Schritte (e) und (g)). Das Dicht-und/oder Klebemittel fixiert die Abdeckung und die Rückwand in den Aufnahmeeinrichtungen der Rahmenteile, so dass diese auch stoffschlüssig gehalten werden, und dichtet den Solarkollektor gegenüber Umgebungseinflüssen ab.

Eine vorteilhafte Ausgestaltung des Verfahrens umfasst weiter den Schritt: Schritt (k): Säubern der Aufnahmeeinrichtungen in/an den ersten Rahmenteilen und/oder den zweiten Rahmenteilen, insbesondere der Aufnahmeeinrichtungen zum Einpassen der Abdeckung sowie optional der Rückwand, mittels eines, insbesondere von einem elektrischen Lichtbogen erzeugten, Plasmas. Dieser Schritt erfolgt vorzugsweise vor Auftragen des Dicht- und/oder Klebemittels an den Aufnahmeeinrichtungen (Schritt (j)) und verbessert die Haftbedingungen des Dicht- und/oder Klebemittels an den Aufnahmeeinrichtungen.

Eine vorteilhafte Ausgestaltung des Verfahrens umfasst weiter den Schritt: Schritt (I): Einbringen eines Wärmedämmelements in einen Zwischenraum zwischen Solarabsorber und Rückwand, insbesondere Auflegen des Wärmedämmelements auf die Rückwand. Dieser Schritt erfolgt vorzugsweise vor dem Schieben der ersten Rahmenteile auf den Solarabsorber und die Abdeckung sowie optional auf die Rückwand (Schritt (e)). Mittels des Wärmedämmelements wird ein Wärmeverlust des Solarabsorbers durch die Rückwand und/oder die Rahmenteile reduziert. Beispielsweise kann das Wärmedämmelement eine Wärmedämmmatte sein. In einer alternativen Anordnung kann das Wärmedämmelement so steif und dicht ausgeführt sein, dass es eine Rückwand des Solarkollektors ersetzt.

Die Erfindung geht ferner aus von einer Fügevorrichtung zum Montieren eines Solarkollektors insbesondere nach einem Verfahren der vorhergehenden Ansprüche, wobei der Solarkollektor einen Solarabsorber, eine transparente Abdeckung, einen Rahmen sowie optional eine Rückwand umfasst, wobei der Rahmen mehrere Rahmenteile umfasst. Die erfindungsgemäße Fügevorrichtung ist gekennzeichnet durch:
A: Eine optionale erste Halteeinrichtung zum Halten der optionalen Rückwand, wobei die erste Halteeinrichtung insbesondere zumindest einen schaltbaren Sauggreifer zum ortsfesten Halten der Rückwand sowie vorzugsweise zumindest einen Anschlag zum Ausrichten der Rückwand aufweist. Die erste Halteeinrichtung kann translatorisch und/oder rotatorisch verstellbar gelagert sein. Der Sauggreifer arbeitet mit Unterdruck.
B: Zumindest zwei, vorzugsweise vier, Montagedorne zum Halten der ersten Rahmenteile und des Solarabsorbers, wobei die Montagedorne insbesondere auf zwei einander gegenüberliegenden Seiten der Fügevorrichtung angeordnet sind, wobei die Montagedorne translatorisch und/oder rotatorisch, insbesondere parallel zu einer von der ersten Halteeinrichtung gebildeten Ebene sowie senkrecht zu der Ebene, verstellbar gelagert sind.
C: Eine zweite Halteeinrichtung zum Halten der Abdeckung, wobei die zweite Halteeinrichtung insbesondere zumindest einen schaltbaren Sauggreifer zum ortsfesten Halten der Abdeckung sowie vorzugsweise zumindest einen Anschlag zum Ausrichten der Abdeckung aufweist, wobei die zweite Halteeinrichtung translatorisch und/oder rotatorisch, insbesondere parallel zu einer von der ersten Halteeinrichtung gebildeten Ebene sowie senkrecht zu der Ebene, verstellbar gelagert ist.
D: Zumindest einen Schieber zum Schieben der ersten Rahmenteile auf den Solarabsorber, die Abdeckung sowie optional auf die Rückwand. Insbesondere kann der Schieber eine vierte Halteeinrichtung zum verkantungsfreien Schieben der ersten Rahmenteile und sicheren Einpassen des Solarabsorbers, der Abdeckung sowie optional der Rückwand in zugeordnete Aufnahmeeinrichtungen der ersten Rahmenteile umfassen.

Eine vorteilhafte Ausgestaltung der Fügevorrichtung umfasst weiter
E: Zumindest eine dritte Halteeinrichtung zum Halten und/oder Schieben der zweiten Rahmenteile auf die Abdeckung sowie optional die Rückwand. Insbesondere ist die dritte Halteeinrichtung zum verkantungsfreien Schieben der zweiten Rahmenteile und sicheren Einpassen der Abdeckung sowie optional der Rückwand in zugeordnete Aufnahmeeinrichtungen der zweiten Rahmenteile geeignet ausgebildet.

Eine vorteilhafte Ausgestaltung der Fügevorrichtung umfasst weiter
F: Eine Auftrageeinrichtung zum Auftragen eines Dicht- und/oder Klebemittels an den Aufnahmeeinrichtungen in/an den ersten Rahmenteilen und/oder den zweiten Rahmenteilen. Insbesondere kann die Auftrageeinrichtung ein verfahrbares Dosiersystem umfassen, bei dem das Dicht- und/oder Klebemittel aus einem Behälter durch einen Schlauch und eine Düse an den Aufnahmeeinrichtungen aufgetragen wird.

Eine vorteilhafte Ausgestaltung der Fügevorrichtung umfasst weiter
G: Eine Säuberungseinrichtung zum Säubern der Aufnahmeeinrichtungen in/an den ersten Rahmenteilen und/oder den zweiten Rahmenteilen, insbesondere umfassend eine verfahrbare Plasmaerzeugungseinrichtung zum Erzeugen eines elektrischen Plasmas in/an den Aufnahmeeinrichtungen.

Eine vorteilhafte Ausgestaltung der Fügevorrichtung umfasst weiter
H: Eine Verbindungseinrichtung zum Verbinden der Rahmenteile miteinander, insbesondere eine Verbindungseinrichtung zum Verrasten, Verschrauben, Vernieten, Verklipsen, Verkleben, Verlöten und/oder Verschweißen der Rahmenteile miteinander. Insbesondere umfasst die Verbindungseinrichtung eine Bereitstellungseinrichtung für die Verbindungsmittel.

Die Zeichnung illustriert die Erfindung anhand von Abbildungen zu ausgewählten Montageschritten. Es zeigt:
- Figur 1: einen montierten Solarkollektor mit vier schematisch angedeuteten Montagedornen einer Fügevorrichtung;
- Figur 2: Komponenten eines Solarkollektors in Explosionsdarstellung mit schematisch angedeuteten Komponenten einer Fügevorrichtung;
- Figur 3: drei Querschnitte durch ein Rahmenteil;
- Figur 4: zwei erste Rahmenteile im Querschnitt mit eingeführten Montagedornen;
- Figur 5: zwei erste Rahmenteile im Querschnitt und ein Sammelrohr eines Solarabsorber-Rohrleitungssystems mit eingeführten Montagedornen, sowie transparente Abdeckung, Absorberblech mit Leitrohren und Rückwand;
- Figur 6: einen montierten Solarkollektor im Querschnitt entsprechend Figur 5.

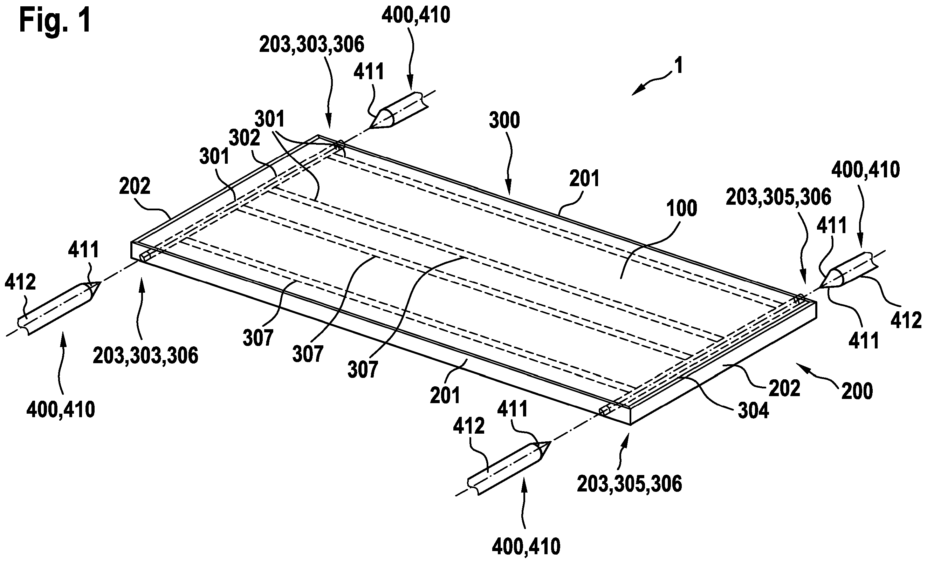

Figur 1 zeigt einen montierten Solarkollektor 1 zum Umwandeln von solarer Strahlungsenergie in Wärme, wobei die Wärme auf ein fließendes Kühlfluid wie Wasser oder ein Wasser-Frostschutz-Gemisch übertragen und mit diesem zu einer Nutzung abgeführt wird. Dazu umfasst der Solarkollektor 1 eine transparente Abdeckung 100, einen Rahmen 200 aus zwei ersten Rahmenteilen 201 und zwei zweiten Rahmenteilen 202 sowie einen Solarabsorber 300 mit einem Rohrleitungssystem 301. Das Rohrleitungssystem 301 weist ein Verteilerrohr 302 mit zwei Verteilerrohrenden 303 und ein Sammelrohr 304 mit zwei Sammelrohrenden 305 auf. Die Rohrenden 303, 305 ragen durch Rahmenöffnungen 203 aus den ersten Rahmenteilen 201 nach außen heraus. In jedem Rohrende 303, 305 ist eine stirnseitige Absorberöffnung 306 zum Eintritt und/oder Austritt von Kühlfluid vorgesehen. Das Verteilerrohr 302 und das Sammelrohr 304 sind durch harfenartig angeordnete, kühlfluidleitende Leitrohre 307 verbunden. Schematisch angedeutet sind vier Montagedorne 410 einer Fügevorrichtung 400, die zum Montieren des Solarkollektors 1 Verwendung finden. Die Montagedorne 410 sind in einer Ruheposition dargestellt, also ohne Eingriff in ein Montagegeschehen, insbesondere ohne Eingriff in die Rahmenöffnungen 203 und Absorberöffnungen 306. Zu erkennen ist ein vom Montagedorn 410 umfasster kegelförmiger Montageabschnitt 411, der, wenn er in eine Montageposition verstellt wird, beginnend an einem vorderen freien Ende des Montageabschnitts 411, in die Rahmenöffnungen 203 und Absorberöffnungen 306 eingeführt werden kann.

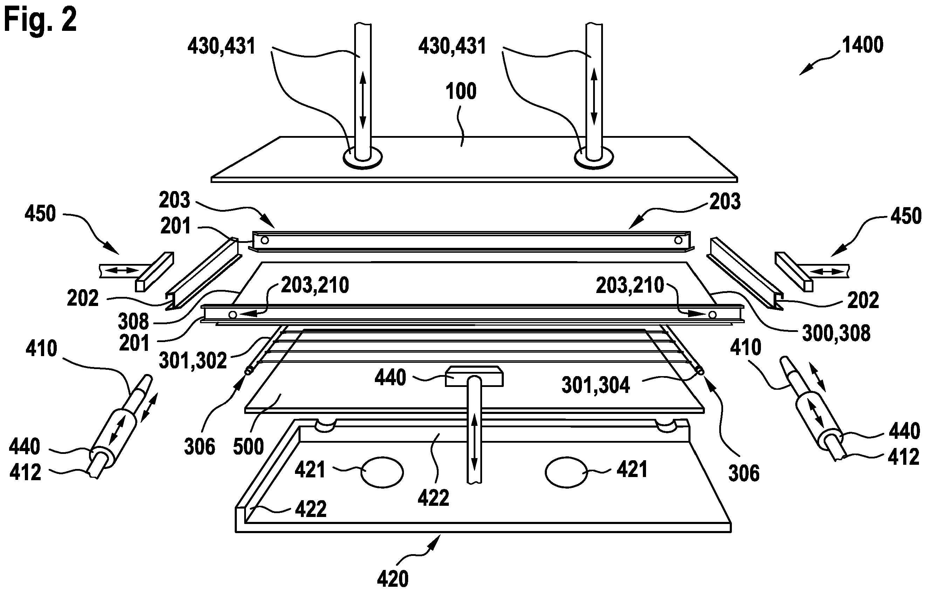

Figur 2 zeigt Komponenten eines Solarkollektors 1 in Explosionsdarstellung zusammen mit schematisch angedeuteten Komponenten einer Fügevorrichtung 400. Die Komponenten des Solarkollektors 1 sind die transparente Abdeckung 100; der Solarabsorber 300 umfassend ein Absorberblech 308 und das Rohrleitungssystem 301 mit vier Absorberöffnungen 306 (zwei davon vom Absorberblech 308 verdeckt); eine Rückwand 500; zwei erste Rahmenteile 201 mit jeweils zwei Rahmenöffnungen 203; zwei zweite Rahmenteile 202. Absorberblech 308 und Rohrleitungssystem 301 sind zur besseren Sichtbarkeit hier getrennt dargestellt, sie bilden aber im Zusammenhang mit dieser Erfindung die bauliche Einheit Solarabsorber 300 und sind fest und wärmeleitend miteinander verlötet oder verschweißt; alternativ können sie auch einteilig ausgebildet sein. Die Komponenten der Fügevorrichtung 400 sind (A) eine erste Halteeinrichtung 420 zum Halten der Rückwand 500 mit zwei schaltbaren Sauggreifern 421 zum ortsfesten Halten der Rückwand 500 in einer Position H1 sowie mit einem Anschlag 422 zum Ausrichten der Rückwand 500; (B) vier Montagedorne 410, von denen nur die zwei vorderen Montagedorne 410 sichtbar sind, zum Einführen in jeweils eine Rahmenöffnung 203, zum Halten der ersten Rahmenteile 201, zum Einführen in jeweils eine Absorberöffnung 306 und Halten des Solarabsorbers 300 in einer Position H2; zwei weitere, hier nicht sichtbare Montagedorne sind auf der gegenüberliegenden Rückseite angeordnet; (C) eine zweite Halteeinrichtung 430 zum Halten der Abdeckung 100 mit zwei schaltbaren Sauggreifern 431 zum ortsfesten Halten der Abdeckung 100 in einer Position H3 parallel vor dem Solarabsorber 300; (D) zwei dreiteilige Schieber 440, von denen nur der vordere dreiteilige Schieber 440 sichtbar ist, zum Schieben der ersten Rahmenteile 201 auf den Solarabsorber 300, die Abdeckung 100 sowie die Rückwand 500 (zwei Teile des Schiebers 440 sind hier konzentrisch zu den Montagedornen 410 ausgebildet, diese zwei Teile des Schiebers 440 sind unabhängig von den Montagedornen 410 bewegbar); ein weiterer, hier nicht sichtbarer Schieber ist spiegelbildlich auf der gegenüberliegenden Rückseite angeordnet; (E) zwei dritte Halteeinrichtungen 450 zum Halten der zweiten Rahmenteile 202 in einer Position H0 seitlich neben dem Solarabsorber 300, der Abdeckung 100 sowie der Rückwand 500 und zum Schieben der zweiten Rahmenteile 202 auf die Abdeckung 100, die Rückwand 500 sowie an die ersten Rahmenteile 201. Rein symbolisch gezeigt sind mögliche translatorische und/oder rotatorische Verstellbewegungen der Komponenten der Fügevorrichtung 400, wie sie zum Einführen der Montagedorne 410 in erste Rahmenteile 201 und Solarabsorber 300 sowie zum Halten und/oder Ausrichten und/oder Schieben von Rückwand 500, Rahmenteilen 201, 202, Solarabsorber 300 und Abdeckung 100 nötig sind. Die Komponenten der Fügevorrichtung 400 sind insbesondere durch hier nicht dargestellte Strukturelemente mit der Fügevorrichtung 400 verbunden.

Damit die ersten Rahmenteile 201 und zweiten Rahmenteile 202 für eine rechtwinklige Eckverbindung lückenlos aneinander geschoben sowie dicht und optisch ansprechend miteinander verbunden werden können, sind sie an ihren Enden bevorzugt unter einem Winkel von 45 Grad auf Gehrung gesägt. Nicht dargestellt ist ein Wärmedämmelement, das auf die Rückwand 500 aufgelegt und/oder im Zwischenraum zwischen Rückwand 500 und Solarabsorber 300 angeordnet sein kann.

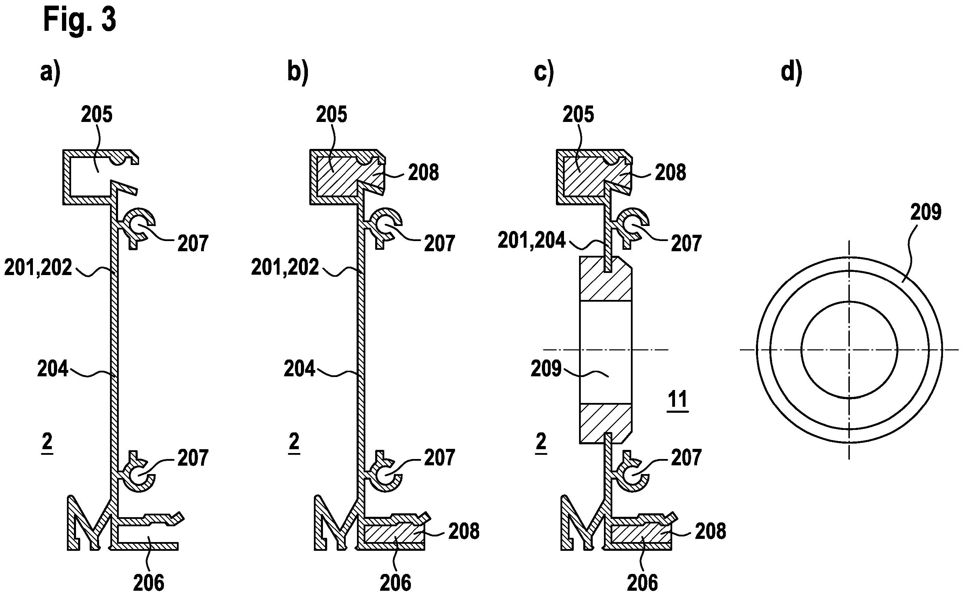

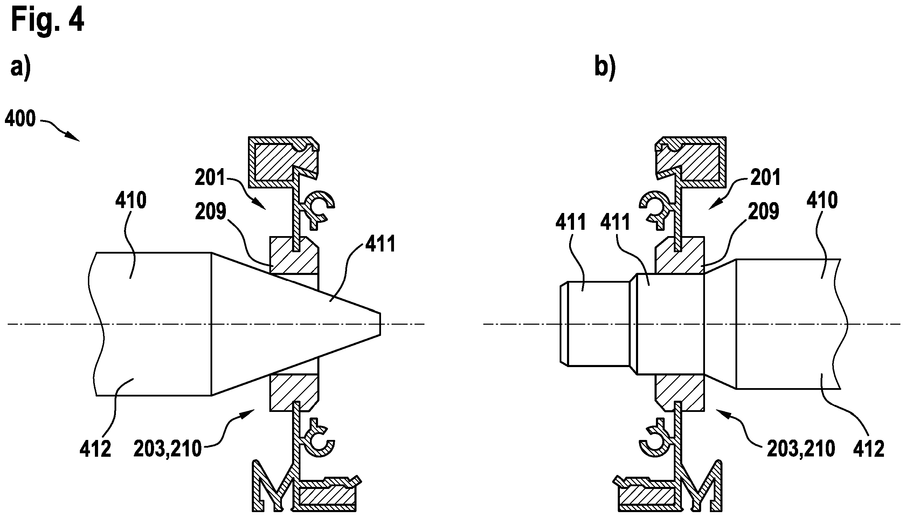

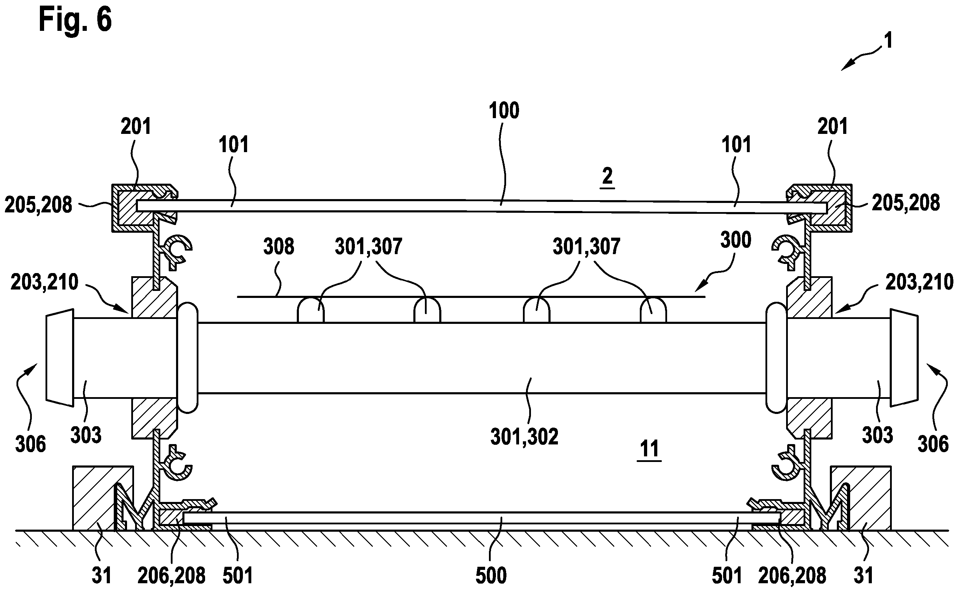

Figur 3 zeigt drei Querschnitte durch ein erstes Rahmenteil 201 und/oder zweites Rahmenteil 202, wie es beispielsweise aus einem leistenförmig-gestreckten Strangpressprofil entstehen kann. Die Querschnitte zeigen eine Wand 204 im Querschnitt, deren Höhe einer Höhe des zu montierenden Solarkollektors 1 entspricht. In der gewählten Darstellung ist eine Außenumgebung 2 des Solarkollektors jeweils links der Querschnitte zu finden, während sich ein Innenraum 11 des Solarkollektors 1 jeweils rechts der Querschnitte findet. Weiter zeigen die Querschnitte eine nutförmige Aufnahmeeinrichtung 205 zum Einpassen der Abdeckung 100, insbesondere eines Kantenbereichs 101 der Abdeckung 100, nach Art einer Nut-und-Feder-Verbindung; sowie eine weitere nutförmige Aufnahmeeinrichtung 206 zum Einpassen der Rückwand 500, insbesondere eines Kantenbereichs 501 der Rückwand 500, nach Art einer Nut-und-Feder-Verbindung. Die Aufnahmeeinrichtungen 205, 206 öffnen sich nach rechts zum Innenraum 11 des Solarkollektors 1. Ferner sind zwei Schraubkanäle 207 zur Herstellung einer Eckverbindung (Verschraubung) eines ersten Rahmenteils 201 mit einem zweiten Rahmenteil 202 dargestellt. Figur 3a zeigt ein Rahmenteil 201, 202 in einem Zustand, der sich zum Säubern der Aufnahmeeinrichtungen 205, 206, insbesondere mittels einer Säuberungseinrichtung, insbesondere umfassend eine Plasmaerzeugungseinrichtung zum Erzeugen eines elektrischen Plasmas, eignet. Figur 3b zeigt ein Rahmenteil 201, 202, bei dem mittels einer Auftrageeinrichtung ein Dicht- und/oder Klebemittel 208, insbesondere ein Silikon aufweisend, in/an den Aufnahmeeinrichtungen 205, 206 zum Einpassen der Abdeckung 100 und der Rückwand 500 aufgetragen ist. Figur 3c zeigt ein erstes Rahmenteil 201 mit einer darin montierten Dichtung 209 im Querschnitt, wobei die Dichtung 209 einen Spalt zwischen einem Rohrende 303, 305 des Solarabsorber-Rohrleitungssystems 301 (hier nicht dargestellt, siehe Figur 6) und einer im ersten Rahmenteil 201 ausgebildeten, dem Rohrende 303, 305 zugeordneten Aufnahmeeinrichtung 210 (ein beispielsweise kreisförmiger Durchbruch im ersten Rahmenteil 201) abdichtet. Die Aufnahmeeinrichtung 210 bildet gleichzeitig auch die Rahmenöffnung 203 zum Einführen eines Montagedorns 410 (siehe Figur 4). Figur 3d zeigt die Dichtung 209 in einer Draufsicht.

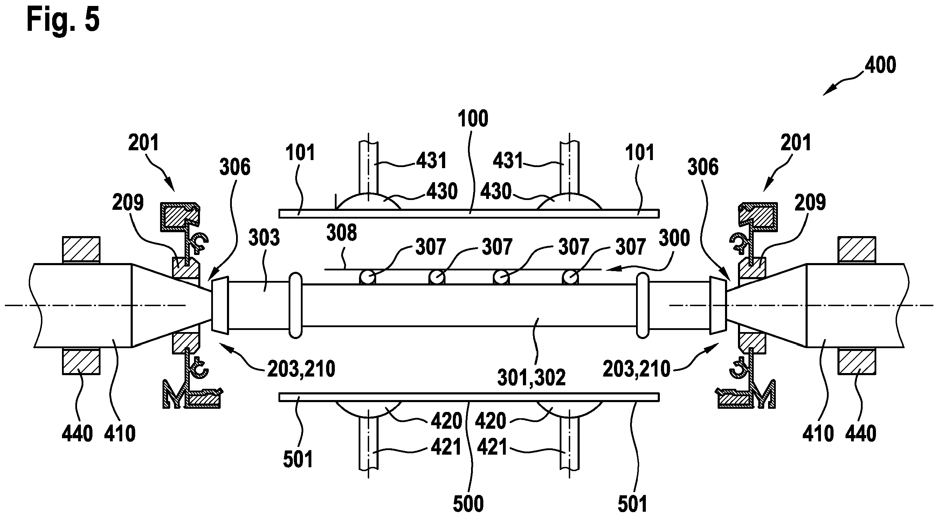

Figur 4 zeigt zwei erste Rahmenteile 201 mit Dichtung 209 im Querschnitt, entsprechend Figur 3c. Die mit der Dichtung 209 abgedichtete Aufnahmeeinrichtung 210 zur (späteren) Aufnahme eines Rohrendes 303, 305 des Rohrleitungssystems 301 bildet gleichzeitig auch die Rahmenöffnung 203 zum Einführen eines Montagedorns 410 und Halten des ersten Rahmenteils 201. Figur 4a zeigt ein erstes Rahmenteil 201 und ein vorderes freies Ende eines Montagedorns 410 mit einem kegelförmigen Montageabschnitt 411, der teilweise in die Aufnahmeeinrichtung 210 und Rahmenöffnung 203 eingeführt ist. Ein Tiefenanschlag oder Endpunkt einer Einführbewegung des Montagedorns 410 ergibt sich bei Berührung zwischen dem Kegel und der dem Rohrende 303, 305 zugeordneten Öffnung in der Dichtung 209. Figur 4b zeigt ein weiteres erstes Rahmenteil 201 und ein vorderes freies Ende eines alternativen Montagedorns 410 mit zwei zylindrischen Montageabschnitten 411, von denen der erste (rechte) Montageabschnitt 411 in die Aufnahmeeinrichtung 210 und Rahmenöffnung 203 eingeführt ist. Ein Tiefenanschlag oder Endpunkt einer Einführbewegung des Montagedorns 410 ergibt sich am Übergang zwischen dem erstem Montageabschnitt 411 und einem tragenden Schaft 412 des Montagedorns 410. In beziehungsweise an den Montageabschnitten 411 können Spreizmittel (hier nicht dargestellt) zum Aufspreizen und Fixieren in der Rahmenöffnung 203 vorgesehen sein. Alternativ oder ergänzend erfolgt das Fixieren des Montagedorns 410 in der Rahmenöffnung 203 durch Reibschluss und/oder Formschluss. Die Montagedorne 410 von Figur 4a und 4b sind translatorisch und/oder rotatorisch verstellbar in einer hier nicht dargestellten Fügevorrichtung 400 gelagert, so dass die Montageabschnitte 411 in die Rahmenöffnungen 203 eingeführt werden können. Die dargestellten Montagedorne 410 sind auf zwei einander gegenüberliegenden Seiten einer Fügevorrichtung 400 angeordnet und können so in einem weiteren Montageschritt neben den ersten Rahmenteilen 201 einen Solarabsorber 300 (hier nicht dargestellt, siehe Figur 5) zwischen sich aufnehmen und halten, indem sie nach Einführen in die Rahmenöffnungen 203 weiter in die Absorberöffnungen 306 eingeführt werden.

Figur 5 zeigt zwei erste Rahmenteile 201 mit Dichtung 209 im Querschnitt und ein Verteilerrohr 302 eines Solarabsorber-Rohrleitungssystems 301. Zwei Montagedorne 410 sind, von gegenüberliegenden Seiten einer Fügevorrichtung 400 (nicht dargestellt) kommend, durch Rahmenöffnungen 203 der ersten Rahmenteile 201 in die Absorberöffnungen 306 der Verteilerrohrenden 303 eingeführt und halten die ersten Rahmenteile 201 und das Verteilerrohr 302. Denkbar (aber nicht sichtbar, da in dieser Darstellung verdeckt) ist, dass zwei weitere Montagedorne 410, von gegenüberliegenden Seiten der Fügevorrichtung 400 kommend, durch weitere Rahmenöffnungen 203 der ersten Rahmenteile 201 in die Absorberöffnungen 306 von Rohrenden 305 eines Sammelrohrs 304 eingeführt sind und die ersten Rahmenteile 201 und das Sammelrohr 304 halten. Mit dem Verteilerrohr 302 fest und kühlfluidleitend verbunden sind vier Leitrohre 307 und das Sammelrohr 304 (nicht sichtbar, da in dieser Darstellung verdeckt). Mit den Leitrohren 307 fest und wärmeleitend verbunden ist ein Absorberblech 308. Dadurch, dass die Montagedorne 410 von gegenüberliegenden Seiten der Fügevorrichtung 400 kommend in das Verteilerrohr 302 und/oder Sammelrohr 304 eingreifen, sind eine Kraft und eine Bewegung seitens der Fügevorrichtung 400 zum Ausrichten und ortsfesten Halten des Solarabsorbers 300 vorgebbar. Die Montagedorne 410 halten den Solarabsorber 300 in einer Position H2. Der Solarabsorber 300 kann in einer horizontalen Position H2 oder vertikalen Position H2 gehalten sein, wobei sich die horizontale Position insbesondere für ein Halten mit vier Montagedornen 410 anbietet, und wobei sich die vertikale Position insbesondere für ein Halten mit zwei Montagedornen 410 anbietet. Parallel vor dem Solarabsorber 300 ist in einer Position H3 eine transparente Abdeckung 100 angeordnet. Die Abdeckung 100 wird von zwei schematisch angedeuteten Sauggreifern 431 einer zweiten Halteeinrichtung 430 gehalten. Parallel hinter dem Solarabsorber 300 ist in einer Position H1 eine Rückwand 500 angeordnet. Die Rückwand 500 wird von zwei schematisch angedeuteten Sauggreifern 421 einer ersten Halteeinrichtung 420 gehalten. Zwei Schieber 440 zum Schieben der ersten Rahmenteile 201 auf die Rohrenden 303, 305 des Solarabsorbers 300, die Kantenbereiche 101 der Abdeckung 100 sowie die Kantenbereiche 501 der Rückwand 500 sind hier konzentrisch zu den Montagedornen 410 ausgebildet. Die Schieber 440 sind unabhängig von den Montagedornen 410 bewegbar. Alternativ können die Schieber 440 auch unabhängig von den Montagedornen 410 ausgebildet sein.

Figur 6 zeigt einen montierten Solarkollektor 1 im Querschnitt entsprechend Figur 5. Die beiden ersten Rahmenteile 201 sind auf den Solarabsorber 300, die Abdeckung 100 und die Rückwand 500, insbesondere auf die Rohrenden 303, 305 von Verteilerrohr 302 und Sammelrohr 304 (nicht sichtbar, da in dieser Darstellung verdeckt), zwei einander gegenüberliegende erste Kantenbereiche 101 der Abdeckung 100 und zwei einander gegenüberliegende erste Kantenbereiche 501 der Rückwand 500 geschoben. Die Kantenbereiche 101, 501 von Abdeckung 100 und Rückwand 500 werden zumindest durch das Dicht-und/oder Klebemittel 208, das in den Aufnahmeeinrichtungen 205, 206 in/an den ersten Rahmenteilen 201 aufgetragen ist, gehalten. Nicht sichtbar, parallel vor und hinter der Zeichenebene, können zweite Rahmenteile 202 mittels einer dritten Halteeinrichtung 450 in einer Position H0 seitlich neben dem Solarabsorber 300, der Abdeckung 100 und der Rückwand 500 gehalten und auf die Abdeckung 100, die Rückwand 500 und an die ersten Rahmenteile 201 geschoben und mit diesen verschraubt werden. Dazu weisen die zweiten Rahmenteile 202 Aufnahmeeinrichtungen 205, 206 auf, in die das Dicht-und/oder Klebemittel 208 einbringbar ist und die auf einander gegenüberliegende zweite Kantenbereiche 101, 501 von Abdeckung 100 und Rückwand 500 aufschiebbar sind. Insbesondere sind die zweiten Rahmenteile 202 aus dem selben Strangpressprofil wie die ersten Rahmenteile 201 gefertigt, alle Rahmenteile 201, 202 an ihren Enden auf 45-Grad-Gehrung gesägt und übereck zu einem rechtwinkligen Rahmen 200 verschraubt. Zur Vermeidung von Wärmebrücken und Wärmeverlusten ist das Absorberblech 308 so groß, beziehungsweise sind die Kanten des Absorberblechs 308 so weit zurückgesetzt, dass das Absorberblech 308 die Rahmenteile 201, 202 gerade nicht berührt. Der fertig montierte Solarkollektor 1 ist für einen Betrieb beispielhaft mittels Spannpratzen 31 an einer Unterlage 3, beispielsweise eine Dachfläche, Dachsparren oder eine Unterkonstruktion, befestigt.

Ein besonderer Vorteil der Erfindung ergibt sich daraus, dass die ersten Rahmenteile 201 und der Solarabsorber 300 von Montagedornen 410 gehalten werden, wobei die Montagedorne 410 an Stellen ansetzen, die für den grundsätzlichen Aufbau und die grundsätzliche Funktion des Solarkollektors 1 schon vorhanden sind. Dieser Vorteil ergibt sich also insbesondere aus der Identität der Rahmenöffnung 203 zum Einführen des Montagedorns 410 und Halten des ersten Rahmenteils 201 einerseits mit der dem Rohrende 303, 305 des Solarabsorber-Rohrleitungssystems 301 zugeordneten Aufnahmeeinrichtung 210 andererseits; sowie auch aus der Identität der Absorberöffnung 306 zum Einführen des Montagedorns 410 und Halten des Solarabsorbers 300 einerseits mit der Eintrittsöffnung und/oder Austrittsöffnung des Rohrleitungssystems 301 zum Eintritt und Austritt des Kühlfluids andererseits. Ein weiterer Vorteil ergibt sich daraus, dass zum Halten der ersten Rahmenteile 201, zum Halten des Solarabsorbers 300, und zum Durchführen der Rohrenden 303, 305 durch die zugeordneten Aufnahmeeinrichtungen 210 im ersten Rahmenteil 201 nur eine Art Montagedorne 410 erforderlich ist.

## Patentansprüche

1. Verfahren zum Montieren eines Solarkollektors (1),
der Solarkollektor (1) umfassend einen Solarabsorber (300), eine transparente Abdeckung (100), einen Rahmen (200) sowie optional eine Rückwand (500), wobei der Rahmen (200) mehrere Rahmenteile (201, 202) umfasst,
das Verfahren umfassend die Schritte
a. optional: Halten der Rückwand (500) in einer Position H1,
b. an zwei ersten Rahmenteilen (201), wobei jedes erste Rahmenteil (201) mindestens eine Rahmenöffnung (203), vorzugsweise zwei Rahmenöffnungen (203), aufweist: Einführen eines Montagedorns (410) in jede Rahmenöffnung (203) und Halten der ersten Rahmenteile (201) mittels der Montagedorne (410),
c. am Solarabsorber (300), wobei der Solarabsorber (300) mindestens zwei Absorberöffnungen (306), vorzugsweise vier Absorberöffnungen (306), aufweist: Einführen der selben Montagedorne (410) in die Absorberöffnungen (306) und Halten des Solarabsorbers (300) mittels der Montagedorne (410) in einer Position H2, insbesondere parallel vor der Rückwand (500),
d. Halten der Abdeckung (100) in einer Position H3 parallel vor dem Solarabsorber (300),
e. Schieben der ersten Rahmenteile (201) auf den Solarabsorber (300) und die Abdeckung (100) sowie optional auf die Rückwand (500).

2. Verfahren nach Anspruch 1,
das Verfahren weiter umfassend die Schritte
f. Halten zweier zweiter Rahmenteile (202) in einer Position H0 seitlich neben dem Solarabsorber (300), der Abdeckung (100) sowie optional der Rückwand (500),
g. Schieben der zweiten Rahmenteile (202) auf die Abdeckung (100), an die ersten Rahmenteile (201), sowie optional auf die Rückwand (500),
h. Verbinden der ersten Rahmenteile (201) mit den zweiten Rahmenteilen (202).

3. Verfahren nach Anspruch 1 oder 2,
**dadurch gekennzeichnet, dass** das Halten der Rückwand (500) und/oder des Solarabsorbers (300) und/oder der Abdeckung (100) und/oder der zweiten Rahmenteile (202) ein Ausrichten und ortsfestes Halten umfasst.

4. Verfahren nach einem der vorangehenden Ansprüche,
**dadurch gekennzeichnet,**
• **dass** das Schieben der ersten Rahmenteile (201) auf den Solarabsorber (300) und die Abdeckung (100) sowie optional auf die Rückwand (500) ein Einpassen des Solarabsorbers (300), der Abdeckung (100) sowie optional der Rückwand (500), insbesondere ein Einpassen von Rohrenden (303, 305) eines Solarabsorber-Rohrleitungssystems (301), von Kantenbereichen (101) der Abdeckung (100) sowie optional von Kantenbereichen (501) der Rückwand (500), in zugeordnete Aufnahmeeinrichtungen (205, 206, 210) in/an den ersten Rahmenteilen (201) umfasst, und/oder
• **dass** das Schieben der zweiten Rahmenteile (202) auf die Abdeckung (100) sowie optional auf die Rückwand (500) ein Einpassen der Abdeckung (100) sowie optional der Rückwand (500), insbesondere ein Einpassen von Kantenbereichen (101) der Abdeckung (100) sowie optional von Kantenbereichen (501) der Rückwand (500), in zugeordnete Aufnahmeeinrichtungen (205, 206) in/an den zweiten Rahmenteilen umfasst.

5. Verfahren nach Anspruch 4,
**dadurch gekennzeichnet,**
• **dass** das Schieben der ersten Rahmenteile (201) auf den Solarabsorber (300) und die Abdeckung (100) sowie optional auf die Rückwand (500) auf einander gegenüberliegenden Seiten des Solarabsorbers (300) sowie auf einander gegenüberliegenden ersten Kantenbereichen (101, 501) der Abdeckung (100) und der Rückwand (500) erfolgt, und/oder
• **dass** das Schieben der zweiten Rahmenteile (202) auf die Abdeckung (100) sowie optional auf die Rückwand (500) auf einander gegenüberliegenden zweiten Kantenbereichen (101, 501) der Abdeckung (100) sowie optional der Rückwand (500) erfolgt.

6. Verfahren nach einem der vorangehenden Ansprüche,
das Verfahren weiter umfassend den Schritt
j. Auftragen eines Dicht- und/oder Klebemittels (208), insbesondere ein Silikon aufweisend, an den Aufnahmeeinrichtungen (205, 206, 210) in/an den ersten Rahmenteilen (201) und/oder den zweiten Rahmenteilen (202), insbesondere an den Aufnahmeeinrichtungen (205, 206) zum Einpassen der Abdeckung (100) sowie optional der Rückwand (500),
wobei dieser Schritt vorzugsweise vor dem Schieben der ersten Rahmenteile (201) und/oder der zweiten Rahmenteile (202) auf den Solarabsorber (300) und die Abdeckung (100) sowie optional auf die Rückwand (500) erfolgt.

7. Verfahren nach einem der vorangehenden Ansprüche,
das Verfahren weiter umfassend den Schritt
k Säubern der Aufnahmeeinrichtungen (205, 206, 210) in/an den ersten Rahmenteilen (201) und/oder den zweiten Rahmenteilen (202), insbesondere der Aufnahmeeinrichtungen (205, 206) zum Einpassen der Abdeckung (100) sowie optional der Rückwand (500), mittels eines, insbesondere von einem elektrischen Lichtbogen erzeugten, Plasmas,
wobei dieser Schritt vorzugsweise vor Auftragen eines Dicht- und/oder Klebemittels (208) an den Aufnahmeeinrichtungen (205, 206, 210) erfolgt.

8. Verfahren nach einem der vorangehenden Ansprüche,
das Verfahren weiter umfassend den Schritt
I Einbringen eines Wärmedämmelements in einen Zwischenraum zwischen Solarabsorber (300) und Rückwand (500),
wobei dieser Schritt vorzugsweise vor dem Schieben der ersten Rahmenteile (201) auf den Solarabsorber (300) und die Abdeckung (100) sowie optional auf die Rückwand (500) erfolgt.

9. Fügevorrichtung (400) zum Montieren eines Solarkollektors (1) insbesondere nach einem Verfahren der vorhergehenden Ansprüche,
der Solarkollektor (1) umfassend einen Solarabsorber (300), eine transparente Abdeckung (100), einen Rahmen (200) sowie optional eine Rückwand (500), wobei der Rahmen (200) mehrere Rahmenteile (201, 202) umfasst, wobei die Rahmenteile (201, 202) zwei ersten Rahmenteile (201) umfassen, die Fügevorrichtung (400) **gekennzeichnet durch**
A. optional: eine erste Halteeinrichtung (420) zum Halten der Rückwand (500), wobei die erste Halteeinrichtung (420) insbesondere zumindest einen schaltbaren Sauggreifer (421) zum ortsfesten Halten der Rückwand (500) sowie vorzugsweise zumindest einen Anschlag (422) zum Ausrichten der Rückwand (500) aufweist,
B. zumindest zwei Montagedorne (410) zum Halten der ersten Rahmenteile (201) und des Solarabsorbers (300), wobei die Montagedorne (410) insbesondere auf zwei einander gegenüberliegenden Seiten der Fügevorrichtung (400) angeordnet sind, wobei die Montagedorne (410) translatorisch und/oder rotatorisch verstellbar gelagert sind,
C. eine zweite Halteeinrichtung (430) zum Halten der Abdeckung (100), wobei die zweite Halteeinrichtung (430) insbesondere zumindest einen schaltbaren Sauggreifer (431) zum ortsfesten Halten der Abdeckung (100) sowie vorzugsweise zumindest einen Anschlag zum Ausrichten der Abdeckung (100) aufweist, wobei die zweite Halteeinrichtung (430) translatorisch und/oder rotatorisch verstellbar gelagert ist,
D. zumindest einen Schieber (440) zum Schieben der ersten Rahmenteile (201) auf den Solarabsorber (300), die Abdeckung (100) sowie optional auf die Rückwand (500).

10. Fügevorrichtung nach Anspruch 9,
**gekennzeichnet durch**
E. zumindest eine dritte Halteeinrichtung (450) zum Halten und/oder Schieben der zweiten Rahmenteile (202) auf die Abdeckung (100) sowie optional die Rückwand (500).

11. Fügevorrichtung nach Anspruch 9 oder 10,
**gekennzeichnet durch**
F. eine Auftrageeinrichtung zum Auftragen eines Dicht- und/oder Klebemittels (208) an den Aufnahmeeinrichtungen (205, 206, 210) in/an den ersten Rahmenteilen (201) und/oder den zweiten Rahmenteilen (202).

12. Fügevorrichtung nach einem der Ansprüche 9 bis 11,
**gekennzeichnet durch**
G. eine Säuberungseinrichtung zum Säubern der Aufnahmeeinrichtungen (205, 206, 210) in/an den ersten Rahmenteilen (201) und/oder den zweiten Rahmenteilen (202), insbesondere umfassend eine Plasmaerzeugungseinrichtung zum Erzeugen eines elektrischen Plasmas.

13. Fügevorrichtung nach einem der vorangehenden Ansprüche,
**gekennzeichnet durch**
H. eine Verbindungseinrichtung zum Verbinden der Rahmenteile (201, 202) miteinander, insbesondere eine Verbindungseinrichtung zum Verschrauben der Rahmenteile (201, 202) miteinander.

## Claims

1. Method for mounting a solar collector (1),
the solar collector (1) comprising a solar absorber (300), a transparent cover (100), a frame (200) and optionally a rear wall (500), wherein the frame (200) comprises a plurality of frame parts (201, 202),
the method comprising the steps of
a. optionally: holding the rear wall (500) in a position H1
b. on two first frame parts (201), wherein each first frame part (201) has at least one frame opening (203), preferably two frame openings (203): inserting a mounting mandrel (410) into each frame opening (203) and holding the first frame parts (201) by means of the mounting mandrels (410),
c. on the solar absorber (300), wherein the solar absorber (300) has at least two absorber openings (306), preferably four absorber openings (306): inserting the same mounting mandrels (410) into the absorber openings (306) and holding the solar absorber (300) in a position H2, in particular parallel in front of the rear wall (500), by means of the mounting mandrels (410),
d. holding the cover (100) in a position H3 parallel in front of the solar absorber (300),
e. pushing the first frame parts (201) onto the solar absorber (300) and the cover (100) and optionally onto the rear wall (500).

2. Method according to Claim 1,
the method further comprising the steps of
f. holding two second frame parts (202) in a position H0 laterally next to the solar absorber (300), the cover (100) and optionally the rear wall (500),
g. pushing the second frame parts (202) onto the cover (100), against the first frame parts (201) and optionally onto the rear wall (500),
h. connecting the first frame parts (201) to the second frame parts (202) .

3. Method according to Claim 1 or 2,
**characterized in that** holding the rear wall (500) and/or the solar absorber (300) and/or the cover (100) and/or the second frame parts (202) comprises orientation and holding fixed in position.

4. Method according to one of the preceding claims,
**characterized**
• **in that** pushing the first frame parts (201) onto the solar absorber (300) and the cover (100) and optionally onto the rear wall (500) comprises fitting the solar absorber (300), the cover (100) and optionally the rear wall (500), in particular fitting pipe ends (303, 305) of a solar absorber pipeline system (301), edge regions (101) of the cover (100) and optionally edge regions (501) of the rear wall (500), into associated receiving devices (205, 206, 210) in/on the first frame parts (201), and/or
• **in that** pushing the second frame parts (202) onto the cover (100) and optionally onto the rear wall (500) comprises fitting the cover (100) and optionally the rear wall (500), in particular fitting edge regions (101) of the cover (100) and optionally edge regions (501) of the rear wall (500), into associated receiving devices (205, 206) in/on the second frame parts.

5. Method according to Claim 4,
**characterized**
• **in that** pushing the first frame parts (201) onto the solar absorber (300) and the cover (100) and optionally onto the rear wall (500) takes place on opposite sides of the solar absorber (300) and on opposite first edge regions (101, 501) of the cover (100) and the rear wall (500), and/or
• **in that** pushing the second frame parts (202) onto the cover (100) and optionally onto the rear wall (500) takes place on opposite second edge regions (101, 501) of the cover (100) and optionally the rear wall (500).

6. Method according to one of the preceding claims,
the method further comprising the step of
j. applying a sealing and/or adhesive agent (208), in particular containing a silicone, to the receiving devices (205, 206, 210) in/on the first frame parts (201) and/or the second frame parts (202), in particular to the receiving devices (205, 206) for fitting the cover (100) and optionally the rear wall (500),
wherein this step preferably takes place before pushing the first frame parts (201) and/or the second frame parts (202) onto the solar absorber (300) and the cover (100) and optionally onto the rear wall (500).

7. Method according to one of the preceding claims,
the method further comprising the step of
k. cleaning the receiving devices (205, 206, 210) in/on the first frame parts (201) and/or the second frame parts (202), in particular the receiving devices (205, 206) for fitting the cover (100) and optionally the rear wall (500), by means of a plasma, in particular generated by an electric arc,
wherein this step preferably takes place before applying a sealing and/or adhesive agent (208) to the receiving devices (205, 206, 210).

8. Method according to one of the preceding claims,
the method further comprising the step of
1. introducing a thermally insulating element into an intermediate space between the solar absorber (300) and the rear wall (500),
wherein this step preferably takes place before pushing the first frame parts (201) onto the solar absorber (300) and the cover (100) and optionally onto the rear wall (500) .

9. Joining apparatus (400) for mounting a solar collector (1), in particular according to a method of the preceding claims,
the solar collector (1) comprising a solar absorber (300), a transparent cover (100), a frame (200) and optionally a rear wall (500), wherein the frame (200) comprises a plurality of frame parts (201, 202), wherein the frame parts (201, 202) comprise two first frame parts (201),
the joining apparatus (400) **characterized by**
A. optionally: a first holding device (420) for holding the rear wall (500), wherein the first holding device (420) has, in particular, at least one switchable suction gripper (421) for holding the rear wall (500) fixed in position and preferably has at least one stop (422) for orienting the rear wall (500),
B. at least two mounting mandrels (410) for holding the first frame parts (201) and the solar absorber (300), wherein the mounting mandrels (410) are arranged, in particular, on two opposite sides of the joining apparatus (400), wherein the mounting mandrels (410) are mounted in a translationally and/or rotationally adjustable manner,
C. a second holding device (430) for holding the cover (100), wherein the second holding device (430) has, in particular, at least one switchable suction gripper (431) for holding the cover (100) fixed in position and preferably has at least one stop for orienting the cover (100), wherein the second holding device (430) is mounted in a translationally and/or rotationally adjustable manner,
D. at least one slide (440) for pushing the first frame parts (201) onto the solar absorber (300), the cover (100) and optionally onto the rear wall (500).

10. Joining apparatus according to Claim 9,
**characterized by**
E. at least one third holding device (450) for holding and/or pushing the second frame parts (202) onto the cover (100) and optionally the rear wall (500).

11. Joining apparatus according to Claim 9 or 10,
**characterized by**
F. an application device for applying a sealing and/or adhesive agent (208) to the receiving devices (205, 206, 210) in/on the first frame parts (201) and/or the second frame parts (202).

12. Joining apparatus according to one of Claims 9 to 11,
**characterized by**
G. a cleaning device for cleaning the receiving devices (205, 206, 210) in/on the first frame parts (201) and/or the second frame parts (202), in particular comprising a plasma-generating device for generating an electrical plasma.

13. Joining apparatus according to one of the preceding claims,
**characterized by**
H. a connecting device for connecting the frame parts (201, 202) to one another, in particular a connecting device for screwing the frame parts (201, 202) to one another.

## Revendications

1. Procédé de montage d'un collecteur solaire (1),
le collecteur solaire (1) comportant un absorbeur solaire (300), un recouvrement transparent (100), un cadre (200) ainsi qu'éventuellement une paroi arrière (500), le cadre (200) comportant plusieurs parties de cadre (201, 202), le procédé comportant les étapes suivantes
a. éventuellement : maintien de la paroi arrière (500) dans une position H1,
b. au niveau de deux premières parties de cadre (201), chaque première partie de cadre (201) comprenant au moins une ouverture de cadre (203), de préférence deux ouvertures de cadre (203) : insertion d'un mandrin de montage (410) dans chaque ouverture de cadre (203) et maintien des premières parties de cadre (201) au moyen des mandrins de montage (410),
c. au niveau de l'absorbeur solaire (300), l'absorbeur solaire (300) comprenant au moins deux ouvertures d'absorbeur (306), de préférence quatre ouvertures d'absorbeur (306) : insertion des mêmes mandrins de montage (410) dans les ouvertures d'absorbeur (306) et maintien de l'absorbeur solaire (300) au moyen des mandrins de montage (410) dans une position H2, en particulier parallèlement devant la paroi arrière (500),
d. maintien du recouvrement (100) dans une position H3 parallèlement devant l'absorbeur solaire (300),
e. glissement des premières parties de cadre (201) sur l'absorbeur solaire (300) et le recouvrement (100) ainsi qu'éventuellement sur la paroi arrière (500).

2. Procédé selon la revendication 1,
le procédé comportant en outre les étapes suivantes
f. maintien de deux deuxièmes parties de cadre (202) dans une position H0 latéralement à côté de l'absorbeur solaire (300), du recouvrement (100) ainsi qu'éventuellement de la paroi arrière (500),
g. glissement des deuxièmes parties de cadre (202) sur le recouvrement (100), au niveau des premières parties de cadre (201), ainsi qu'éventuellement sur la paroi arrière (500),
h. liaison des premières parties de cadre (201) aux deuxièmes parties de cadre (202).

3. Procédé selon la revendication 1 ou 2,
**caractérisé en ce que** le maintien de la paroi arrière (500) et/ou de l'absorbeur solaire (300) et/ou du recouvrement (100) et/ou des deuxièmes parties de cadre (202) comporte une orientation et un maintien de manière fixe.

4. Procédé selon l'une des revendications précédentes,
**caractérisé en ce que**
• le glissement des premières parties de cadre (201) sur l'absorbeur solaire (300) et le recouvrement (100) ainsi qu'éventuellement sur la paroi arrière (500) comporte un emboîtement de l'absorbeur solaire (300), du recouvrement (100) ainsi qu'éventuellement de la paroi arrière (500), en particulier un emboîtement d'extrémités tubulaires (303, 305) d'un système de conduites tubulaires d'absorbeur solaire (301), de régions de bord (101) du recouvrement (100) ainsi qu'éventuellement de régions de bord (501) de la paroi arrière (500), dans des dispositifs de réception (205, 206, 210) associés dans/sur les premières parties de cadre (201), et/ou
• le glissement des deuxièmes parties de cadre (202) sur le recouvrement (100) ainsi qu'éventuellement sur la paroi arrière (500) comporte un emboîtement du recouvrement (100) ainsi qu'éventuellement de la paroi arrière (500), en particulier un emboîtement de régions de bord (101) du recouvrement (100) ainsi qu'éventuellement de régions de bord (501) de la paroi arrière (500), dans des dispositifs de réception (205, 206) associés dans/sur les deuxièmes parties de cadre.

5. Procédé selon la revendication 4,
**caractérisé en ce que**
• le glissement des premières parties de cadre (201) sur l'absorbeur solaire (300) et le recouvrement (100) ainsi qu'éventuellement sur la paroi arrière (500) a lieu sur des côtés opposés l'un à l'autre de l'absorbeur solaire (300) ainsi que sur des premières régions de bord (101, 501) opposées l'une à l'autre du recouvrement (100) et de la paroi arrière (500), et/ou
• le glissement des deuxièmes parties de cadre (202) sur le recouvrement (100) ainsi qu'éventuellement sur la paroi arrière (500) a lieu sur des deuxièmes régions de bord (101, 501) opposées l'une à l'autre du recouvrement (100) ainsi qu'éventuellement de la paroi arrière (500).

6. Procédé selon l'une des revendications précédentes, le procédé comportant en outre l'étape suivante
j. application d'un agent d'étanchéité et/ou d'un adhésif (208), en particulier comprenant de la silicone, sur les dispositifs de réception (205, 206, 210) dans/sur les premières parties de cadre (201) et/ou les deuxièmes parties de cadre (202), en particulier sur les dispositifs de réception (205, 206) pour l'emboîtement du recouvrement (100) ainsi qu'éventuellement de la paroi arrière (500),
cette étape ayant lieu de préférence avant le glissement des premières parties de cadre (201) et/ou des deuxièmes parties de cadre (202) sur l'absorbeur solaire (300) et le recouvrement (100) ainsi qu'éventuellement sur la paroi arrière (500).

7. Procédé selon l'une des revendications précédentes, le procédé comportant en outre l'étape suivante
k. nettoyage des dispositifs de réception (205, 206, 210) dans/sur les premières parties de cadre (201) et/ou les deuxièmes parties de cadre (202), en particulier des dispositifs de réception (205, 206) pour l'emboîtement du recouvrement (100) ainsi qu'éventuellement de la paroi arrière (500), au moyen d'un plasma généré en particulier par un arc électrique,
cette étape ayant lieu de préférence avant l'application d'un agent d'étanchéité et/ou d'un adhésif (208) sur les dispositifs de réception (205, 206, 210).

8. Procédé selon l'une des revendications précédentes, le procédé comportant en outre l'étape suivante
1. introduction d'un élément d'isolation thermique dans un espace intermédiaire entre l'absorbeur solaire (300) et la paroi arrière (500),
cette étape ayant lieu de préférence avant le glissement des premières parties de cadre (201) sur l'absorbeur solaire (300) et le recouvrement (100) ainsi qu'éventuellement sur la paroi arrière (500).

9. Dispositif d'assemblage (400) pour le montage d'un collecteur solaire (1) en particulier selon un procédé des revendications précédentes,
le collecteur solaire (1) comportant un absorbeur solaire (300), un recouvrement transparent (100), un cadre (200) ainsi qu'éventuellement une paroi arrière (500), le cadre (200) comportant plusieurs parties de cadre (201, 202), les parties de cadre (201, 202) comportant deux premières parties de cadre (201),
le dispositif d'assemblage (400) étant **caractérisé par**
A. éventuellement : un premier dispositif de maintien (420) pour le maintien de la paroi arrière (500), le premier dispositif de maintien (420) comprenant en particulier au moins un organe de préhension à aspiration (421) commutable pour le maintien de manière fixe de la paroi arrière (500) ainsi que de préférence au moins une butée (422) pour l'orientation de la paroi arrière (500),
B. au moins deux mandrins de montage (410) pour le maintien des premières parties de cadre (201) et de l'absorbeur solaire (300), les mandrins de montage (410) étant disposés en particulier sur deux côtés opposés l'un à l'autre du dispositif d'assemblage (400), les mandrins de montage (410) étant montés de manière déplaçable en translation et/ou en rotation,
C. un deuxième dispositif de maintien (430) pour le maintien du recouvrement (100), le deuxième dispositif de maintien (430) comprenant en particulier au moins un organe de préhension à aspiration (431) commutable pour le maintien de manière fixe du recouvrement (100) ainsi que de préférence au moins une butée pour l'orientation du recouvrement (100), le deuxième dispositif de maintien (430) étant monté de manière déplaçable en translation et/ou en rotation,
D. au moins un coulisseau (440) pour le glissement des premières parties de cadre (201) sur l'absorbeur solaire (300), le recouvrement (100) ainsi qu'éventuellement sur la paroi arrière (500).

10. Dispositif d'assemblage selon la revendication 9,
**caractérisé par**
E. au moins un troisième dispositif de maintien (450) pour le maintien et/ou le glissement des deuxièmes parties de cadre (202) sur le recouvrement (100) ainsi qu'éventuellement la paroi arrière (500).

11. Dispositif d'assemblage selon la revendication 9 ou 10,
**caractérisé par**
F. un dispositif d'application pour l'application d'un agent d'étanchéité et/ou d'un adhésif (208) sur les dispositifs de réception (205, 206, 210) dans/sur les premières parties de cadre (201) et/ou les deuxièmes parties de cadre (202).

12. Dispositif d'assemblage selon l'une des revendications 9 à 11,
**caractérisé par**
G. un dispositif de nettoyage pour le nettoyage des dispositifs de réception (205, 206, 210) dans/sur les premières parties de cadre (201) et/ou les deuxièmes parties de cadre (202), en particulier comportant un dispositif de génération de plasma pour la génération d'un plasma électrique.

13. Dispositif d'assemblage selon l'une des revendications précédentes,
**caractérisé par**
H. un dispositif de liaison pour la liaison des parties de cadre (201, 202) les unes aux autres, en particulier un dispositif de liaison pour le vissage des parties de cadre (201, 202) les unes sur les autres.
